# EUROPÄISCHE PATENTSCHRIFT

(11) **EP 0 889 768 B1**
(45) Veröffentlichungstag und Bekanntmachung des Hinweises auf die Patenterteilung: **20.10.1999**
(21) Anmeldenummer: 97908231.0
(22) Anmeldetag: 13.03.1997
(51) Int. Cl.: B23K 1/00, B23K 35/02, F01N 3/28

(54) **GELÖTETER METALLISCHER WABENKÖRPER MIT ABSTANDSHALTERN IN DEN LÖTSPALTEN UND VERFAHREN UND LOT ZU SEINER HERSTELLUNG**
SOLDERED METAL HONEYCOMB STRUCTURES WITH SPACERS IN THE SOLDER GAPS AND PROCESS AND SOLDER FOR ITS PRODUCTION
CORPS METALLIQUES ALVEOLAIRES BRASES MUNIS D'ECARTEURS SITUES DANS LES ESPACES DE BRASAGE, PROCEDE ET METAL D'APPORT DE BRASAGE POUR LES PRODUIRE

(30) Priorität: 22.03.1996 DE 19611396
(43) Veröffentlichungstag der Anmeldung: 13.01.1999
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); BRÜCK, Rolf, D-51429 Bergisch Gladbach (DE)
(74) Vertreter: Kahlhöfer, Hermann, Dipl.-Phys.
(86) Internationale Anmeldenummer: EP9701283
(87) Internationale Veröffentlichungsnummer: WO9735683

(56) Entgegenhaltungen:
- EP-A- 0 259 635
- WO-A-89/11938
- DE-A- 2 228 703
- DE-A- 2 924 592
- GB-A- 1 017 650
- GB-A- 2 103 980
- PATENT ABSTRACTS OF JAPAN vol. 016, no. 107 (M-1222), 17.März 1992 & JP 03 281088 A (TAIYO YUDEN CO LTD), 11.Dezember 1991,
- PATENT ABSTRACTS OF JAPAN vol. 005, no. 061 (M-065), 24.April 1981 & JP 56 014069 A (NEC CORP), 10.Februar 1981,
- PATENT ABSTRACTS OF JAPAN vol. 018, no. 418 (M-1650), 5.August 1994 & JP 06 126479 A (TANAKA DENSHI KOGYO KK), 10.Mai 1994,
- PATENT ABSTRACTS OF JAPAN vol. 010, no. 277 (M-519), 19.September 1986 & JP 61 099563 A (MITSUBISHI HEAVY IND LTD), 17.Mai 1986,

## Beschreibung

Die vorliegende Erfindung betrifft ein Verfahren zum Herstellen eines Wabenkörpers sowie einen entsprechenden Wabenkörper, insbesondere einen Katalysator-Trägerkörper für Abgasanlagen.

Es sind metallische Strukturen, wie z. b. metallische Katalysatorträger für Abgaskatalysatoren, bekannt, die aus wenigstens teilweise strukturierten Blechlagen gewickelt oder geschichtet sind. Die Verbindung der Lagen bzw. der Bleche untereinander erfolgt durch Löten, insbesondere Hartlöten, vorzugsweise bei hohen Temperaturen von über 1100° C im Vakuum. Die metallische Struktur wird auch gegebenenfalls mit einem Mantel verlötet. Die Ausbildung der Lötverbindungen bei einer metallischen Struktur ist ein wesentlicher Verfahrensschritt bei der Herstellung einer solchen metallischen Struktur und hat zwei wesentliche Aspekte. Zunächst beeinflußt die Art und Weise der Art der Lötverbindung die Effektivität des Herstellungsprozesses für metallische Strukturen, insbesondere für Strukturen, die als Katalysatorträger verwendet werden. Ferner hat die Ausbildung der Lötverbindung einen Einfluß auf die Festigkeit und Haltbarkeit der Struktur.

Diese aus der Lötverbindung sich ergebenden Aspekte sind bereits erkannt worden. So ist es bekannt, beim Beloten einen Kleber oder Binder auf die zu verbindenden metallischen Strukturen aufzubringen, wobei das Lotmaterial pulverförmig ist und entweder schon vorher mit dem Kleber oder Binder gemischt, oder später auf diesen aufgebracht wird.

Die DE 29 24 592 A1 beschreibt bereits ein Verfahren zum Herstellen einer Struktur für einen katalytischen Reaktor zur Abgasreinigung bei Brennkraftmaschinen von Kraftfahrzeugen, bei dem die Struktur aus hochtemperaturfesten Stahlblechen gebildet wird. Nach einer Vorbehandlung der Stahlbleche, bei denen es sich um gewellte und glatte Stahlblechlagen handelt, erfolgt an den mit dem Lotauftrag zu versehenden Stellen ein Auftrag eines Binders oder Klebers. Auf den Binder oder Kleber werden Lotpartikel aufgebracht. Der Binder- bzw. Kleber- und Lotauftrag erfolgt in Streifen in Richtung der Wellen der gewellten Stahlbleche oder senkrecht dazu. Danach werden die abwechselnd lageweise angeordneten Stahlbleche durch Aufheizen der Struktur einer gleichseitigen Lötung aller Lagen untereinander unterzogen. Um ein gleichmäßiges Verlöten an allen Lötstellen zwischen den Stahlblechen zu gewährleisten, wird im allgemeinen mit einem Überschuß an Lot bzw. Bindemittel gearbeitet.

Aus der DE 29 24 592 A1 ist ferner bekannt, daß vor dem abwechselnden lageweisen Anordnen der glatten oder gewellten Bleche in die einzelnen Lagen ein oder mehrere Lötbänder, etwa in Längsrichtung der glatten Stahlbleche, eingelegt werden.

Nach erfolgter Lotbeaufschlagung werden in bekannter Weise die Bleche zu einer Struktur aufgewickelt, in einen Mantel eingesetzt und in einem Ofen verlötet. Die Blechlagen werden mit einer Vorspannung in den Mantel eingesetzt.

Während des Lötvorgangs, in dem das Lotmaterial schmilzt, wird dieses aufgrund der Vorspannung aus den Kontaktstellen zwischen den Blechlagen herausgedrückt. Dies führt zu einem Verlust der Vorspannung der Bleche innerhalb des Mantels und zu unerwünschte Lageverschiebungen der Bleche und einer ungleichmäßigen Verteilung von Lötspalten zwischen den Blechlagen. Dadurch, daß das flüssige Lotmaterial während des Lötprozesses aus den Kontaktstellen herausgedrückt und eventuell verschoben wird, kann auch nicht sichergestellt werden, daß sich an den gewünschten Kontaktstellen tatsächlich Lötverbindungen ausbilden. Schlechte Lötverbindungen haben jedoch, wie bereits ausgeführt, einen negativen Einfluß auf die Festigkeit und Haltbarkeit der Struktur.

Diese aufgrund der Belotung entstehenden Probleme sind bereits erkannt worden. Ein Lösungsansatz ist durch die WO89/11938 bekannt. Dort wird vorgeschlagen, die Bleche vor dem Wickeln oder Schichten in den zu verlötenden Bereichen mit einem Kleber oder Binder zu beschichten. Anschließend werden die Bleche Zu einer Struktur gewikkelt oder geschichtet und erst dann wird die Struktur mit Lotpulver beaufschlagt. Durch diese Verfahrensweise liegen die Blechlagen fest aneinander, und es gelangt Lotmaterial in die zwischen den Blechen vorhandenen Zwickel. Ein Verlust der Vorspannung tritt beim Aufschmelzen des Lotes nicht mehr ein. Allerdings ist der Fertigungsprozeß wegen der genau einzuhaltenden Reihenfolge der Schritte nicht sehr flexibel.

Hiervon ausgehend, liegt der vorliegenden Erfindung die Aufgabe zugrunde, ein Verfahren zum Herstellen eines Wabenkörpers für Abgaskatalysatoren, anzugeben, welches einen Vorspannungsverlust der Blechlagen während eines Lötvorgangs zumindest vermindert, Ferner soll ein gelöteter Wabenkörper angegeben werden, der möglichst gleichartig ausgebildete Lötverbindungen aufweist.

Die Aufgabe wird erfindungsgemäß durch ein Verfahren mit den Merkmalen des Anspruchs 1 gelöst. Ein gelöterter Wabenkörper ist Gegenstand des unabhängigen Anspruchs 6. Vorteilhafte weitere Ausgestaltungen und Weiterbildungen sind Gegenstand der abhängigen Ansprüche.

Ein erfindungsgemäßes Verfahren Zum Beloten von aus wenigstens teilweise strukturierten Blechlagen gewickelten oder geschichteten Strukturen, insbesondere Wabenkörpern für Abgaskatalysatoren, zeichnet sich dadurch aus, daß wenigstens eine der benachbarten Blechlagen mit wenigstens einer zur benachbarten Blechlage hin gerichteten Prägung ausgebildet und das Lot im Bereich der Prägung eingebracht wird. Die Prägung wirkt als Abstandshalter zwischen den Blechlagen während des auf die Belotung folgenden Lötprozesses. Dadurch, daß der Abstand zwischen den Blechlagen während des Lötprozesses durch die Einlage nahezu konstant gehalten wird, tritt kein Vorspannungsverlust ein, wenn die gewickelte oder geschichtete Struktur, eingebracht in einen Mantel, gelötet wird. Durch die Prägung kann auch ein definierter Lötspalt zwischen den benachbarten Blechlagen während des Lötprozesses eingehalten werden.

Ein erfindugsgemäßer Wabenkörper aus wenigstens teilweise strukturierten Blechlagen, die gewickelt oder geschichtet sind, zeichnet sich dadurch aus, daß zwischen den Blechlagen Lötpsalte vorhanden sind, die zumindest teilweise mit die Blechlagen verbindendem Lot gefüllt sind, wobei die Spaltbreite durch Abstandshalter festgelegt wird.

Der Abstandshalter ist durch wenigstens eine mindestens in einem der benachbarten Blechlagen in den späteren Lötbereichen zum benachbarten Blech hin gerichtete Prägung ausgebildet. Die Prägungen beabstanden die Blechlagen in den später zu verlötenden Bereichen und bilden einen Lötspalt aus. Die Prägungen liegen an der benachbarten Blechlage an. Schmilzt das Lot während des Lötprozesses, so bleibt die Vorspannung der Blechlage im Mantel beibehalten. Ein weiterer Vorteil der Prägungen ist darin zu sehen, daß durch diese eine Benetzung der Blechlagen mit dem Lot verbessert wird.

Weitere Vorteile und Merkmale der Erfindung werden anhand der in der Zeichnung dargestellten Ausführungsbeispiele erläutert. Es zeigen:
- Figur 1: Möglichkeiten des Aufbringens einer Lotbeschichtung,
- Figur 2: ein zwischen gewelltes und glattes Blech einzubringendes Lotband,
- Figur 3: eine Lötstelle zwischen gewelltem und glattem Blech, wobei das gewellte Blech Prägungen aufweist,

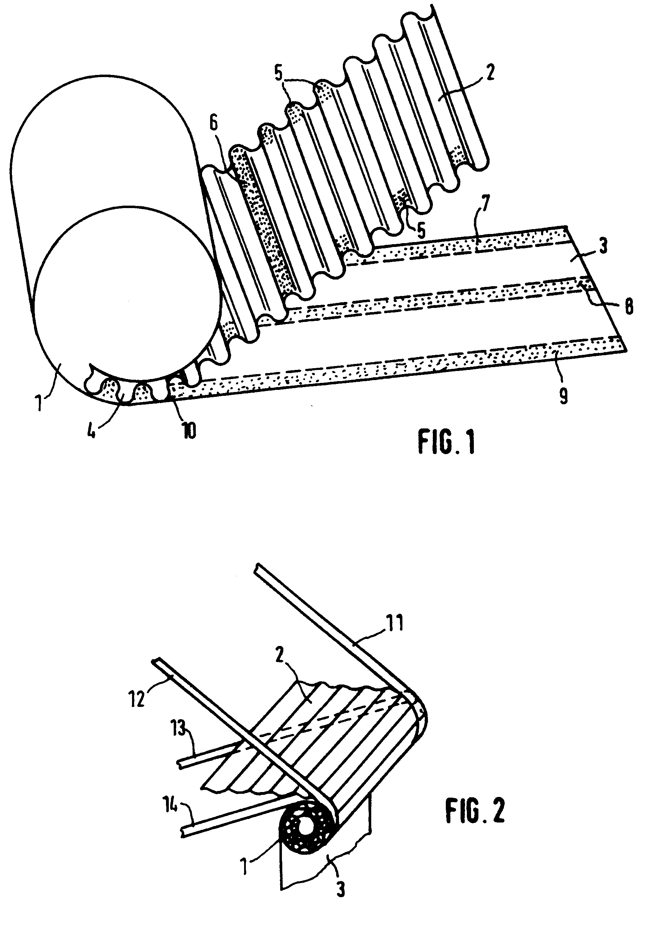

Figur 1 zeigt einen Wabenkörper 1, der aus gewellten 2 und glatten 3 Blechlagen 3 gewickelt und geschichtet ist. Die gewellte Blechlage 3 weist Lotbeschichtungen auf. Die Lotbeschichtungen 5 sind in dem jeweiligen äußeren Randbereich der gewellten Blechlage 2 aufgebracht. Es ist ersichtlich, daß nicht jeder Wellenberg der gewellten Blechlage 2 zwangsläufig mit einer Beschichtung 5 versehen werden muß. Figur 1 zeigt ferner eine Beschichtung 6, die über die gesamte Breite der Blechlage 2 auf dem Wellenberg einer Welle aufgebracht ist. Bei den Beschichtungen 5, 6 handelt es sich um einen Auftrag eines Lotpulvers mit Partikeln, die mittels einer Kleber- oder Binderschicht auf der Blechlage 2 haften.

Die glatte Blechlage 3 weist drei streifenförmige Beschichtungen 7, 8 und 9, die sich in Längsrichtung der glatten Blechlage 3 erstrecken, auf. Die Beschichtung 7 und 9 ist im äußeren Randbereich der glatte Blechlage 3 aufgebracht. Die streifenförmige Beschichtung 8 ist im wesentlichen im mittleren Bereich der glatten Blechlage 2 aufgebracht. Der gewickelte oder geschichtete Wabenkörper 1 wird anschließend mit Vorspannung in einen nicht dargestellten Mantel eingebracht. Dieses Ensemble wird anschließend in einen Lötofen eingebracht und auf eine Löttemperatur erwärmt.

Wie bereits vorstehend ausgeführt, wird ein gewickelter oder geschichteter Wabenkörper 1, der eine metallische Struktur bildet, in ein Mantelrohr eingebracht. Zur Verbindung des Wabenkörpers 1 mit dem Mantelrohr wird der Wabenkörper 1 an seiner äußeren Mantelfläche bevorzugt ebenfalls in den zu verlötenden Bereichen mit einem Lot und einer Einlage versehen.

In der Figur 2 ist ein weiteres Ausführungsbeispiel einer möglichen Belotung dargestellt. Nach Figur 2 wird vorgeschlagen, zwischen der Blechlage 2 und der Blechlage 3 jeweils ein Lötband 11 bis 14 einzubringen. Die jeweiligen Lotbänder 11 bis 14 sind im wesentlichen parallel zueinander zwischen der Blechlage 3 und der Blechlage 2 eingelegt. Die Einbringung der Lötbänder 11 bis 14 erfolgt während eines Wickelprozesses.

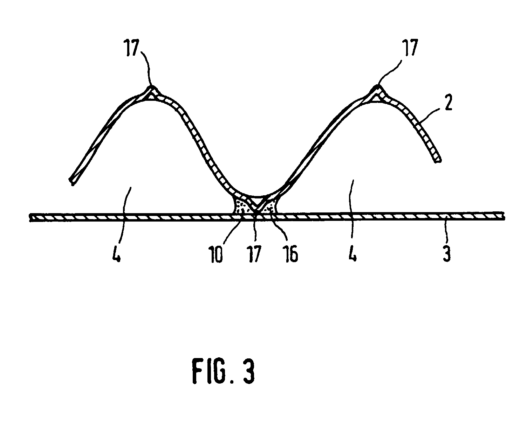

In der Figur 3 ist eine erfindungsgemäße Möglichkeit dargestellt, die Vorspannung der gewellten Blechlage 2 und der glatten Blechlage 3 während eines Lötprozesses aufrecht zu erhalten. Hierzu weist die gewellte Blechlage 2 Prägungen 17 auf, die im Bereich 10 der Lötverbindungen ausgebildet sind. Die Prägungen 17 sind zur benachbarten Blechlage 3 hin gerichtet. Bei den Prägungen 17 kann es sich um Mikrostrukten, die transversal zum Kanal 4 des Wabenkörpers 1 verlaufen, handeln. Alternativ besteht die Möglichkeit, die Prägungen 17 auch in die glatte Blechlage 3 einzubringen.

### Bezugszeichenliste

- 1: Wabenkörper
- 2: gewellte Blechlage
- 3: glatte Blechlage
- 4: Fluidkanal
- 5,6: Beschichtung
- 7,8,9: streifenförmige Beschichtung
- 10: Lötbereich
- 11-14: Lötband
- 16: Lot
- 17: Prägung
- 21: Lötspalt
- d: Spaltbreite

## Patentansprüche

1. Verfahren zum Herstellen eines Wabenkörpers (1) für Abgaskatalysatoren aus wenigstens teilweise strukturierten Blechlagen (2, 3), die gewickelt oder geschichtet werden, wobei die Blechlagen (2, 3) mittels eines zwischen benachbarte Blechlagen (2,3) sich befindenden Lotes (16) verlötet werden, dadurch gekennzeichnet, daß wenigstens eine der benachbarten Blechlagen (2, 3) mit wenigstens einer zur benachbarten Blechlage (2, 3) hin gerichteten Prägung (17) ausgebildet und das Lot (16) im Bereich der Prägung (17) eingebracht wird.

2. Verfahren nach Anspruch 1, dadurch gekennzeichnet, daß wenigstens eine Prägung (17) als eine Mikrostruktur ausgebildet wird.

3. Verfahren nach Anspruch 1 oder 2, dadurch gekennzeichnet, daß wenigstens eine Prägung (17) im wesentlichen tranversal zum Kanal (4) des Wabenkörpers (1) ausgebildet wird.

4. Verfahren nach Anspruch 1, 2 oder 3, dadurch gekennzeichnet, daß wenigstens eine Prägung (17) in wenigstens einer strukturierten, insbesondere einer gewellten, Blechlage (2) ausgebildet wird.

5. Verfahren nach einem der Ansprüche 1 bis 4, dadurch gekennzeichnet, daß wenigstens eine Prägung (17) in wenigstens einer glatten Blechlage (3) ausgebildet wird.

6. Gelöteter Wabenkörper (1) für Abgaskatalysatoren, aus wenigstens teilweise strukturierten Blechlagen (2, 3), die gewickelt oder geschichtet sind, bei dem zwischen den Blechlagen (2, 3) Lötspalte (21) vorhanden sind, die zumindest teilweise mit die Blechlagen (2, 3) verbindendem Lot (16) gefüllt sind, wobei die Blechlagen (2, 3) Kanäle (4) begrenzen, dadurch gekennzeichnet, daß wenigstens in einer der benachbarten Blechlagen (2, 3) in Lötbereichen (10) wenigstens eine zum benachbarten Blech (3) hin gerichtete Prägung (17) als Abstandshalter vorgesehen ist, durch die eine Spaltbreite (d) der Lötspalte (21) festgelegt ist.

7. Wabenkörper nach Anspruch 6, dadurch gekennzeichnet, daß wenigstens eine Prägung (17) als eine Mikrostruktur ausgebildet ist.

8. Wabenkörper nach Anspruch 6 oder 7, dadurch gekennzeichnet, daß wenigstens eine Prägung (17) im wesentlichen tranversal zum Kanal (4) des Wabenkörpers (1) ausgebildet ist.

9. Wabenkörper 6, 7 oder 8, dadurch gekennzeichnet, daß wenigstens eine Prägung (17) in wenigstens einer strukturierten, insbesondere einer gewellten, Blechlage (2) ausgebildet ist.

10. Wabenkörper nach einem der Ansprüche 6 bis 9, dadurch gekennzeichnet, daß wenigstens eine Prägung (17) in wenigstens einer glatten Blechlage (3) ausgebildet ist.

## Claims

1. Process for manufacturing a honeycomb body (1) for exhaust gas catalytic converters from at least in part structured sheet metal layers (2, 3) which are wound or layered, wherein the sheet metal layers (2, 3) are brazed by means of a brazing filler medium (16) located between adjacent sheet metal layers (2, 3), characterised in that at least one of the adjacent sheet metal layers (2, 3) is configured with at least one raised shape (17) directed towards the adjacent sheet metal layer (2, 3), and the brazing filler (16) is applied in the area of the raised shape (17).

2. Process according to claim 1, characterised in that at least one raised shape (17) is configured as a microstructure.

3. Process according to claim 1 or 2, characterised in that at least one raised shape (17) is configured substantially transverse with respect to the channel (4) of the honeycomb body (1)

4. Process according to claim 1, 2 or 3, characterised in that at least one raised shape (17) is configured in at least a structured, in particular a corrugated, sheet metal layer (2).

5. Process according to one of claims 1 to 4, characterised in that at least one raised shape (17) is configured in at least a flat sheet metal layer (3).

6. Brazed honeycomb body (1) for exhaust gas catalytic converters, of at least in part structured sheet metal layers (2, 3) which are wound or layered, in which, between the sheet metal layers (2, 3) there are filler gaps (21), which are at least partly filled with the brazing filler (16) joining together the sheet metal layers (2, 3), wherein the sheet metal layers (2, 3) delimit channels (4), characterised in that in at least one of the adjacent sheet metal layers (2, 3), in brazed areas (10), at least one raised shape (17) directed towards the adjacent sheet (3) is provided as a spacer, by means of which a gap width (d) of the filler gap (21) is established.

7. Honeycomb body according to claim 6, characterised in that at least one raised shape (17) is configured as a microstructure.

8. Honeycomb body according to claim 6 or 7, characterised in that at least one raised shape (17) is configured substantially transverse with respect to the channel (4) of the honeycomb body (1).

9. Honeycomb body 6, 7 or 8, characterised in that at least one raised shape (17) is configured in a structured, in particular a corrugated, sheet metal layer (2).

10. Honeycomb body according to one of claims 6 to 9, characterised in that at least one raised shape (17) is configured in a flat sheet metal layer (3).

## Revendications

1. Procédé de fabrication d'un corps alvéolé (1) pour des catalyseurs de gaz d'échappement, constitué de couches de tôle (2, 3) au moins partiellement structurées qui sont enroulées ou empilées, les couches de tôle (2, 3) étant brasées au moyen d'une brasure (16) située entre des couches de tôle (2, 3) voisines, caractérisé en ce qu'au moins l'une des couches de tôle (2, 3) voisines présente au moins une partie estampée (17) orientée en direction de la couche de tôle (2, 3) voisine et en ce que la brasure (16) est déposée dans la zone de la partie estampée (17).

2. Procédé selon la revendication 1, caractérisé en ce qu'au moins une partie estampée (17) est conformée en microstructure.

3. Procédé selon la revendication 1 ou 2, caractérisé en ce qu'au moins une partie estampée (17) est sensiblement transversale au canal (4) du corps alvéolé (1).

4. Procédé selon la revendication 1, 2, ou 3, caractérisé en ce qu'au moins une partie estampée (17) est réalisée dans au moins une couche de tôle (2) structurée, en particulier ondulée.

5. Procédé selon l'une des revendications 1 à 4, caractérisé en ce qu'au moins une partie estampée (17) est réalisée dans au moins une couche de tôle (3) lisse.

6. Corps alvéolé brasé (1) pour des catalyseurs de gaz d'échappement, constitué de couches de tôle (2, 3) au moins partiellement structurées qui sont enroulées ou empilées, dans lequel entre les couches de tôle (2, 3) sont prévus des interstices de brasage (21) qui sont remplis au moins partiellement de brasure (16) reliant les couches de tôle (2, 3), les couches de tôle (2, 3) délimitant des canaux (4), caractérisé en ce qu'au moins dans l'une des couches de tôle (2, 3) voisines une partie estampée (17) qui est dirigée vers la tôle voisine (3) et qui sert à définir la largeur d'interstice (d) des interstices de brasage (21) est prévue à titre d'élément d'écartement dans les zones de brasage (10).

7. Corps alvéolé selon la revendication 6, caractérisé en ce qu'au moins une partie estampée (17) est conformée en microstructure.

8. Corps alvéolé selon la revendication 6 ou 7, caractérisé en ce qu'au moins une partie estampée (17) est sensiblement transversale au canal (4) du corps alvéolé (1).

9. Corps alvéolé 6, 7 ou 8, caractérisé en ce qu'au moins une partie estampée (17) est réalisée dans au moins une couche de tôle (2) structurée, en particulier ondulée.

10. Corps alvéolé selon l'une des revendications 6 à 9, caractérisé en ce qu'au moins une partie estampée (17) est réalisée dans au moins une couche de tôle (3) lisse.
